# EUROPÄISCHE PATENTSCHRIFT

(11) **EP 2 753 534 B1**
(45) Veröffentlichungstag und Bekanntmachung des Hinweises auf die Patenterteilung: **10.06.2015**
(21) Anmeldenummer: 12759012.3
(22) Anmeldetag: 29.08.2012
(51) Int. Cl.: B62D 25/08, B62D 25/20, B62D 27/06, B62D 29/00, B62D 29/04

(54) **MEHRTEILIGE RÜCKWANDSTRUKTUR**
MULTI-PART REAR WALL STRUCTURE
STRUCTURE DE PANNEAU ARRIÈRE EN PLUSIEURS PARTIES

(30) Priorität: 06.09.2011 DE 102011112351; 17.08.2012 DE 102012016385
(43) Veröffentlichungstag der Anmeldung: 16.07.2014
(73) Patentinhaber: Audi AG, 85045 Ingolstadt (DE)
(72) Erfinder: VOLKMER, Markus, 78247 Hilzingen (DE)
(74) Vertreter: Patzelt, Heike Anna Maria
(86) Internationale Anmeldenummer: PCT/EP2012/003617
(87) Internationale Veröffentlichungsnummer: WO 2013/034257

(56) Entgegenhaltungen:
- WO-A1-02/076792
- WO-A1-2005/056370
- DE-A1- 19 642 821
- DE-A1-102008 061 515
- DE-A1-102009 014 196
- DE-A1-102009 050 971

## Beschreibung

Bisherige Rückwandstrukturen bestehen aus einer ein- oder mehrteiligen Rückwand. Diese Rückwand trennt die Fahrgastzelle vom Hinterwagen des Fahrzeugs ab und verhindert insbesondere bei Fahrzeugen mit Heck- oder Mittelmotor, dass das Antriebsaggregat im Falle eines Unfalls in die Fahrgastzelle eindringt.

Die Rückwand wird entweder nachträglich an der bereits vorgefertigten Tragstruktur befestigt, wobei in der Tragstruktur bereits alle Längsträger, Querträger und Fahrzeugsäulen miteinander verbunden sind, oder die Rückwand ist bereits Bestandteil einer einteiligen Monocoque Fahrgastzelle, an die der Vorder- und Hinterwagen angebracht wird.

Nachteilig hierbei ist jedoch, dass sowohl beim Einbau der Rückwand in die vorgefertigte Tragstruktur als auch beim Monocoque-Aufbau kein Toleranzausgleich mehr möglich ist. Auch ist ein solcher Aufbau bei einem Seitencrash von Nachteil, da durch die Steifigkeit der Rückwand die B- bzw. C-Säule und damit die ganze Tragstruktur zerstört wird und damit eine Reparatur sehr aufwendig und teuer wird.

Die DE 196 42 821 A1 offenbart eine mehrteilige Rückwandstruktur, die aus einer Rückwand und zwei seitlichen Trägern besteht. Hierbei werden die seitlichen Träger der Rückwandstruktur mit den Fahrzeugsäulen der Karosserie-Tragstruktur verbunden.

Nachteilig hierbei ist jedoch, dass die Reparatur von beschädigten Fahrzeugsäulen bei einem Seitenaufprall aufwendig ist, da die Fahrzeugsäulen von der Karosserie-Tragstruktur im Schwellerbereich nur unter hohem Aufwand abgetrennt werden können. Zusätzlich muss auch die Rückwandstruktur von den Fahrzeugsäulen getrennt werden

Aufgabe der Erfindung ist es, eine gewichtsoptimierte Rückwandstruktur aus einem Faserverbundwerkstoff aufzuzeigen, die eine günstige Versicherungseinstufung gewährleistet und die den Reparaturaufwand bei einem Seitencrash vereinfacht.

Die Aufgabe wird dadurch gelöst, indem die Rückwandstruktur aus der Rückwand und den beiden B- bzw. C-Fahrzeugsäulen aufgebaut wird und diese Rückwandstruktur in die Tragstruktur eingesetzt wird. Hierbei weist die B- bzw. C-Säule mehrere Einzelteile auf, während die Rückwand einstückig ist. Jedoch kann die Rückwand auch aus mehreren Teilen zusammengesetzt werden.

Die Vorteile bei einem solchen Aufbau sind, dass beispielsweise bei einem leichten Seitencrash die unbeschädigte Rückwand mit der beschädigten Säule aus der Tragstruktur ausgebaut werden kann, dann die defekte Säule von der Rückwand abgelöst wird und dann durch eine neue Säule ersetzt wird. Danach kann die reparierte Rückwandstruktur mit den neuen Fahrzeugsäulenteilen wieder mit der unbeschädigten Tragstruktur verbunden werden.

Weitere Vorteile ergeben sich aus der Materialwahl. Bestehen die Rückwand und die mehrteiligen Fahrzeugsäulen zumindest größtenteils aus einem Faserverbundwerkstoff, der bei Bedarf auch richtungsabhängige Eigenschaften aufweisen kann, dann wird das Karosseriegewicht verringert ohne dass Einschränkungen in der Fahrersicherheit in Kauf genommen werden müssen. Auch lässt sich mit einem solchen Aufbau ein Toleranzausgleich einfacher bewerkstelligen weil die B-Fahrzeugsäulen erst an der Rückwand befestigt werden und dann erst mit der eigentlichen Tragstruktur verbunden werden.

Als weiterer Vorteil sind auch die optimierte Herstell- und Montageprozesse zu nennen. Da die gleiche Rückwand mit den gleichen Abmessungen für alle Fahrzeugmodelle verwendet werden kann und nur die Fahrzeugsäulen an die verschiedenen Modelle angepasst werden müssen, kann die Rückwand in großer Stückzahl kostengünstig und prozesssicher hergestellt werden. Dagegen erlauben die modellspezifischen Fahrzeugsäulen eine Anpassung an die jeweilige Fahrzeugbreite, Fahrzeughöhe oder das Fahrzeugdesign.

Die Erfindung soll anhand eines Ausführungsbeispiels näher erläutert werden.
Figur 1: Rückwandstruktur
Figur 2: Explosionszeichnung Rückwandstruktur
Figur 3: Rückwandstruktur und Karosserie-Tragstruktur

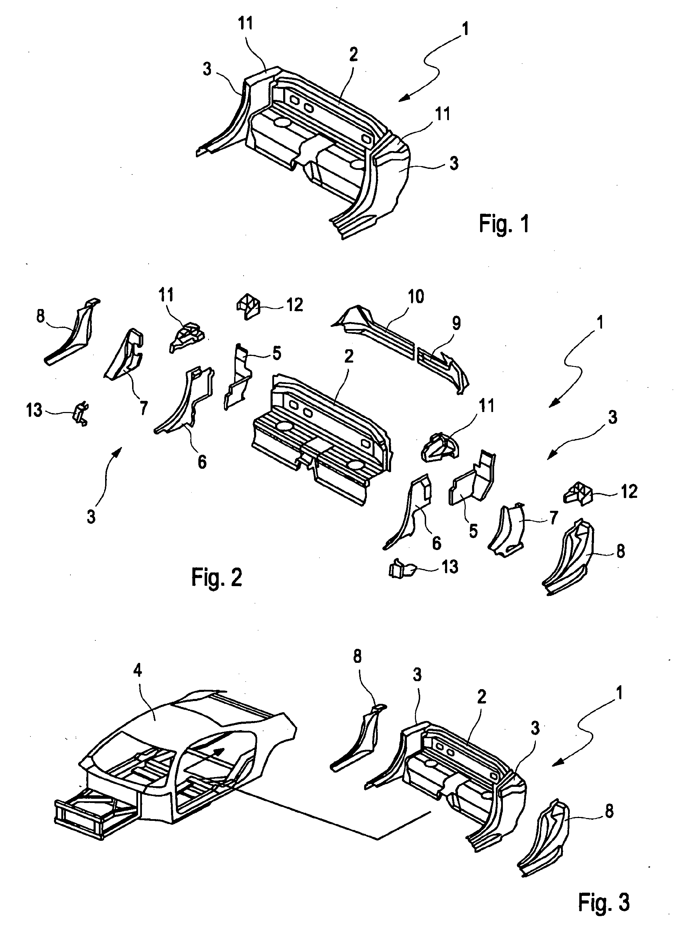

Figur 1 zeigt die erfindungsgemäße Rückwandstruktur 1. Die Rückwandstruktur 1 besteht aus der Rückwand 2 und den Fahrzeugsäulen 3. Die Rückwand 2, die manchmal auch als Hutablage bezeichnet wird, besteht aus einem Faserverbundwerkstoff. Die Rückwand 2 ist in diesem Ausführungsbeispiel einstückig vergossen und besteht aus mehreren Halbzeugen. Dieser Sachverhalt ist durch die durchgezogenen Linien im Bereich der Rückwand 2 angedeutet. Es können auch metallische Einleger in der Rückwand 2 vorhanden sein. Alle Halbzeuge, Einleger und sonstige Bestandteile der Rückwand 2 werden zusammen vergossen und zusammen ausgehärtet werden, so dass eine einstückige Rückwand 2, wie in Figur 2 dargestellt, zur weiteren Verarbeitung vorhanden ist. Diese Rückwand 2 kann so universell ausgebildet sein, dass sie in unterschiedlichen Fahrzeugmodellen zum Einsatz kommt. Die Dimensionierung für eine solche universelle Rückwand 2 ist so ausgelegt, dass sie in jedes gewünschte Fahrzeugmodell passt.

Die Fahrzeugsäulen 3, die auch Bestandteil der Rückwandstruktur 1 sind, bestehen aus mehreren einzelnen Teilen, wie später in Figur 2 gezeigt wird. Die Fahrzeugsäulen 3 bestehen gleichfalls aus einem Faserverbundwerkstoff, können aber auch metallische Bestandteile wie Metallgussknoten 11 beinhalten. Diese Fahrzeugsäulen 3 bilden später die B- oder C-Fahrzeugsäulen am Fahrzeug aus. Diese Einzelteile werden mittels mechanischer oder adhäsiver Mittel direkt oder indirekt mit der Rückwand 2 verbunden. Als mechanische Mittel können Blindnieten oder lösbare Verschraubungen verwendet werden und als adhäsives Mittel Klebstoff. Durch unterschiedliche, fahrzeugmodellabhängige Größen der Fahrzeugsäulenbestandteile 5, 6, 7, 8, 9, 10, 11, 12, 13 kann die Rückwandstruktur 1 mit der immer gleich großen Rückwand 2 auf das jeweilige Fahrzeugmodell angepasst werden.

Figur 2 zeigt die verschiedenen Bestandteile der Rückwandstruktur 1 in einer Explosionszeichnung. Hierbei sollen vor allem die einzelnen Bestandteile der Fahrzeugsäulen 3 und deren Aufbau und Funktion beschrieben werden. Die Säule 3 besteht aus einem vorderen Innenteil 6 und einem hinteren Innenteil 5. Diese Teile 6, 5 bestehen im Ausführungsbeispiel aus einem Faserverbundwerkstoff und sind richtungsabhängig unterschiedlich belastbar, insbesondere im Ausführungsbeispiel sind die Teile 6, 5 zu 66% quasiisotrop und 33% der Fasern sind in Z-Richtung vertikal zur Fahrbahn ausgerichtet und somit für einen leichten Seitenaufprall optimiert. Die wird beispielsweise dadurch erreicht, dass mehrere unidirektionale Schichten übereinander angeordnet werden. Werden mehrere richtungsabhängigen Schichten übereinander gleichmäßig zueinander verdreht, so kann ein richtungsunabhängiger Verbund aufgebaut werden. Im Ausführungsbeispiel sind im Faserverbund 33% der Fasern in Z-Richtung ausgerichtet und 66% der Fasern gleichmäßig verteilt und damit richtungsunabhängig angeordnet.

Weil ein größerer Teil der Fasern in Z-Richtung ausgerichtet ist, können sie höhere Kräfte bei einem Seitenaufprall aufnehmen.

Ferner weist die dargestellte Säule ein Außenteil 8 und ein Oberteil 9, 10 auf, wobei das linke Oberteil 9 für die linke Säule und das rechte Oberteil 10 für die rechte Säule verwendet wird.

Das Außenteil 8 besteht im Ausführungsbeispiel auch aus einem Faserverbundwerkstoff und ist zu 100% quasiisotrop. Die Oberteile 9, 10 bestehen gleichfalls aus einem Faserverbundwerkstoff. Sie weisen einen quasiisotrope Schichtaufbau auf wobei das Profil des Bauteil richtungsabhängig in Y-Richtung ausgerichtet ist.

Zwischen den Innenteilen 6, 5 und dem Außenteil 8 befindet sich eine Fahrzeugsäulenverstärkung 7. Diese besteht auch aus einem Faserverbundwerkstoff und ist zu 100 % quasiisotrop. Zwischen den Innenteilen 6, 5 und dem Außenteil 8 ist auch ein Knotenteil 11 angeordnet. Das Knotenteil 11 dient einerseits zur Verbindung des Oberteils an der restlichen B-Säule 3 und zur Anbindung des Gurtumlenkers und zur Anbindung der Rückwandstruktur an den oberen Hinterwagenbereich. Das Knotenteil 11 ist als Leichtmetall-Gussteil ausgebildet. Ferner befindet sich zwischen den inneren Teilen 6, 5 und dem Außenteil 8 ein Metallprofil 12, das zur Anbindung an dem unteren Hinterwagenbereich und zur Gurtbefestigung dient. Dieses Teil kann als Strangpressprofil oder Gussteil ausgebildet sein. Auch ist zwischen den Innenteilen 6, 5 und dem Außenteil 8 ein Schließbügelträger 13 angeordnet, an dem der Schließbügel für das Türschloss montiert wird.

Auch die Rückwand 2 hat richtungsabhängige Eigenschaften. Sie ist auf Diagonalbelasturigen ausgelegt. Das heißt, ihre Schubfläche hat 100% ±45° während ihr Querträgerprofil 100% 0° in Y-Richtung aufweist.

Um die einzelnen Bestandteile 2, 5, 6, 7, 8, 9, 10, 11, 12, 13 zu verbinden werden Klebstoff, Nieten und Schrauben verwendet. Hierbei ist es besonders von Vorteil wenn Verbindungen zwischen Rückwand 2 und direkt benachbarten Fahrzeugsäulen-Teilen 5, 6, 7, 8, 9, 10, 11, 12, 13 derart lösbar sind, dass die Rückwand 2 ohne Beschädigung entfernt werden und danach wieder unverändert eingesetzt werden kann.

Figur 3 zeigt schematisch den Einbau der Rückwandstruktur 1 mit den integrierten Fahrzeugsäulen 3 und der Rückwand 2 in die Karosserie-Tragstruktur 4. Bei der Karosserie-Tragstruktur 4 handelt es sich um eine herkömmliche Leichtmetall-Gitterstruktur. Jedoch weist diese Gitterstruktur keine hinteren Fahrzeugsäulen 3 auf. Diese Fahrzeugsäulen 3 werden erst mit dem Einbau der Rückwandstruktur 1 in die Karosserie-Tragstruktur 4 eingebracht. Im Ausführungsbeispiel wird die Rückwandstruktur 1 als eigenständige und austauschbare Karosseriebaugruppe aufgebaut. Die Rückwandstruktur 1 beinhaltet die Rückwand 2 und die beiden hinteren Fahrzeugsäulen 3. Im Ausführungsbeispiel werden hierbei die Außenteile 8 der Säule 3 erst nach Einbau der Rückwandstruktur 1 in die Karosserie-Tragstruktur 4 an den bereits befestigten Fahrzeugsäulenbestandteilen der Rückwandstruktur 1 angebracht. Dadurch wird einerseits gewährleistet, dass die Rückwandstruktur 1 bestehend aus Rückwand 2 und Fahrzeugsäulenbestandteilen austauschbar an der Fahrzeug-Tragstruktur 4 angebracht werden kann.

Dadurch können einzelne unbeschädigte Rückwände 2 wieder verwendet werden und zerstörte Säulen 3 einfach ersetzt werden. Durch die Entkopplung der Fahrzeugsäulen 3 von der Karosserie-Tragstruktur können die Reparaturkosten minimiert und das Gewicht optimiert werden.

Auch können durch derartige Rückwandstrukturen Toleranzen in der Karosserie-Tragstruktur ausgeglichen und standardisierte Rückwände für verschiedene Fahrzeugmodelle eingesetzt werden.

## Patentansprüche

1. Mehrteilige Rückwandstruktur (1), die eine eigenständige, austauschbare Karosseriebaugruppe in einer Karosserie-Tragstruktur (4) bildet, die eine Rückwand (2) beinhaltet, die zwischen einer Fahrgastzelle und einem Fahrzeugheck anordbar ist, **dadurch gekennzeichnet, dass** die Rückwandstruktur (1) zusätzlich
- zwei Fahrzeugsäulen (3) die jeweils aus mehreren Fahrzeugsäulenteilen (5, 6, 7, 8, 9, 10, 12 13) bestehen und
- Verbindungsmitteln, die die Rückwand (2) mit mindestens Fahrzeugsäulenteilen (5, 6, 7, 8, 9, 10, 12 13) verbindet, aufweist.

2. Mehrteilige Rückwandstruktur (1) nach Patentanspruch 1, **dadurch gekennzeichnet, dass** die Rückwand (2) aus einem Faserverbundwerkstoff besteht.

3. Mehrteilige Rückwandstruktur (1) nach Patentanspruch 1, **dadurch gekennzeichnet, dass** die Rückwand (2) aus einem hochfesten Stahl besteht.

4. Mehrteilige Rückwandstruktur (1) nach Patentanspruch 1, **dadurch gekennzeichnet, dass** zumindest ein Fahrzeugsäulenteil (5, 6, 7, 8, 9, 10, 12, 13) aus einem Faserverbundwerkstoff besteht.

5. Mehrteilige Rückwandstruktur (1) nach Patentanspruch 1 oder 4, **dadurch gekennzeichnet, dass** zumindest ein Fahrzeugsäulenteil (5, 6, 7, 8, 9, 10, 12, 13) aus einem Leichtmetall besteht.

## Claims

1. Multi-part rear panel structure (1) which forms a separate, replaceable vehicle body component in a vehicle body support structure (4) containing a rear panel (2) which can be arranged between a passenger compartment and a vehicle rear end, **characterised in that** the rear panel structure (1) also comprises
- two vehicle pillars (3), each of which consists of a plurality of vehicle pillar parts (5, 6, 7, 8, 9, 10, 12, 13), and
- connecting means connecting the rear panel (2) to at least vehicle pillar parts (5, 6, 7, 8, 9, 10, 12, 13).

2. Multi-part rear panel structure (1) according to claim 1, **characterised in that** the rear panel (2) consists of a fibre-reinforced composite.

3. Multi-part rear panel structure (1) according to claim 1, **characterised in that** the rear panel (2) consists of a high-strength steel.

4. Multi-part rear panel structure (1) according to claim 1, **characterised in that** at least one vehicle pillar part (5, 6, 7, 8, 9, 10, 12, 13) consists of a fibre-reinforced composite.

5. Multi-part rear panel structure (1) according to either claim 1 or claim 4, **characterised in that** at least one vehicle pillar part (5, 6, 7, 8, 9, 10, 12, 13) consists of a light metal.

## Revendications

1. Structure de paroi arrière en plusieurs parties (1), qui forme un groupe de construction de carrosserie autonome et échangeable dans une structure de support de carrosserie (4), qui contient une paroi arrière (2) qui peut être aménagée entre une cellule de passagers et un hayon de véhicule, **caractérisée en ce que** la structure de paroi arrière (1) présente en plus :
- deux colonnes de véhicule (3) qui sont constituées respectivement de plusieurs parties de colonnes de véhicule (5, 6, 7, 8, 9, 10, 12, 13) et
- des moyens de liaison qui relient la paroi arrière (2) à au moins des parties de colonnes de véhicule (5, 6, 7, 8, 9, 10, 12, 13).

2. Structure de paroi arrière en plusieurs parties (1) selon la revendication 1, **caractérisée en ce que** la paroi arrière (2) est constituée d'un matériau composite fibreux.

3. Structure de paroi arrière en plusieurs parties (1) selon la revendication 1, **caractérisée en ce que** la paroi arrière (2) est constituée d'un acier très résistant.

4. Structure de paroi arrière en plusieurs parties (1) selon la revendication 1, **caractérisée en ce qu'**au moins une partie de colonne de véhicule (5, 6, 7, 8, 9, 10, 12, 13) est constituée d'un matériau composite fibreux.

5. Structure de paroi arrière en plusieurs parties (1) selon la revendication 1 ou la revendication 4, **caractérisée en ce qu'**au moins une partie de colonne de véhicule (5, 6, 7, 8, 9, 10, 12, 13) est constituée d'un métal léger.
